# EUROPÄISCHE PATENTSCHRIFT

(11) **EP 3 269 976 B1**
(45) Veröffentlichungstag und Bekanntmachung des Hinweises auf die Patenterteilung: **02.01.2019**
(21) Anmeldenummer: 16179647.9
(22) Anmeldetag: 15.07.2016
(51) Int. Cl.: F03D 7/02, F03D 7/04

(54) **VERFAHREN ZUR STEUERUNG EINES WINDPARKS**
METHOD FOR CONTROLLING A WIND FARM
PROCÉDÉ DESTINÉ À LA COMMANDE D'UN PARC ÉOLIEN

(43) Veröffentlichungstag der Anmeldung: 17.01.2018
(73) Patentinhaber: Gerdes, Christof, 47803 Krefeld (DE)
(72) Erfinder: Gerdes, Christof, 47803 Krefeld (DE)
(74) Vertreter: Dr. Stark & Partner Patentanwälte mbB

(56) Entgegenhaltungen:
- EP-A1- 2 620 639
- EP-A1- 2 876 300
- WO-A2-2009/027663

## Beschreibung

Die Erfindung betrifft ein Verfahren zur Steuerung eines Windparks mit zumindest zwei Windkraftanlagen, wobei jede Windkraftanlage einen Turm und einen oberseitig an einer Nabe drehbar angebrachten Rotor mit Rotorblättern sowie einen hiervon angetriebenen Generator für die Stromerzeugung aufweist.

Aus der Praxis (siehe z. B. EP 2 876 300 A1) sind Windparks bekannt, bei denen mehrere Windkraftanlagen vorgesehen sind. Durch diese Windkraftanlagen werden Schwingungen in das Erdreich eingekoppelt. Solche Schwingungen resultieren beispielsweise daraus, dass bei dem Vorbeistreichen eines Rotorblattes vor dem Turm dieses Rotorblatt kurzzeitig entlastet wird, was eine Schwingung parallel zur Drehachse des Rotors verursacht. Diese Schwingung, die auch Blattdurchgangsfrequenz genannt wird, überträgt sich über den Turm und das Fundament in das Erdreich.

Problematisch hierbei ist, dass seismische Stationen, beispielsweise zur Überwachung von Erdbebentätigkeiten oder dergleichen, durch derartige Schwingungen beeinträchtigt werden und teilweise nicht mehr ordnungsgemäß betrieben werden können. Als besondere Beeinträchtigung werden harmonische Schwingungen im Frequenzspektrum von ca. 1 bis 10 Hertz angesehen, wohingegen ein Rauschen aus nicht harmonischen Schwingungen unkritischer ist, da dieses besser herausgefiltert werden kann. Sofern jetzt mehrere Windkraftanlagen parallel betrieben werden, können sich die von ihnen eingekoppelten Schwingungen überlagern, was in Abhängigkeit von der Phasenverschiebung zu unterschiedlichen Effekten führen kann. Bei einer Synchronüberlagerung mit derselben Frequenz kommt es zu einer Resonanz, so dass sich die Amplitude in erhöhtem Maße verstärkt. Andersrum heben sich die Amplituden einer sinusförmigen Schwingung gegenseitig auf, sofern sie um jeweils eine halbe Periode gegeneinander versetzt sind. Als Konsequenz aus diesen Störungen resultiert, dass Windkraftanlagen zur Vermeidung von Beeinträchtigungen der Funktionstüchtigkeit von seismischen Anlagen nur in einem ausreichenden Abstand angeordnet sein dürfen. Sofern jedoch eine windtechnisch gesehen gute Position für eine Windkraftanlage zu nah an einer seismischen Station liegt, kann diese aufgrund der Beeinträchtigung der seismischen Station dort möglicherweise nicht gebaut werden bzw. in Betrieb genommen werden.

Aufgabe der Erfindung ist es, die vorgenannten Nachteile zu vermeiden und eine Möglichkeit anzugeben, die aus einem Windpark resultierende Gesamtstärke der Schwingungsamplitude zu reduzieren.

Diese Aufgabe wird bei einem gattungsgemäßen Verfahren dadurch gelöst, dass zumindest ein Sensor die Gesamtstärke der Schwingungsamplitude, die aus den durch die Windkraftanlagen in das Erdreich eingekoppelten Schwingungen resultiert, an der Position des zumindest einen Sensors erfasst, und eine Steuerungseinrichtung den Betriebszustand zumindest einer der Windkraftanlagen so steuert, dass die an der Position des zumindest einen Sensors aus den Schwingungen der einzelnen Windkraftanlagen resultierende Gesamtstärke der Schwingungsamplitude möglichst gering ist. Somit wird eine an der Position des zumindest einen Sensors resultierende möglichst günstige Phasenverschiebung der Schwingungen erreicht. Die Gesamtstärke der dort resultierenden Schwingungsamplitude soll möglichst aufgehoben oder aber zumindest reduziert werden oder aber zu einem Rauschen verwischen.

Erfindungsgemäß kann die Steuerungseinrichtung den Betriebszustand von zwei der Windkraftanlagen so steuern, dass ihre Rotationsgeschwindigkeiten gleich sind. Somit resultiert eine gleichbleibende Zusammenwirkung der Betriebszustände dieser beiden Windkraftanlagen.

Vorteilhafterweise kann die Steuerungseinrichtung den Betriebszustand von zwei der Windkraftanlagen so steuern, dass die an der Position des zumindest einen Sensors aus den Schwingungen der einzelnen Windkraftanlagen resultierenden einzelnen Schwingungsamplituden einander möglichst aufheben.

Auch kann die Steuerungseinrichtung den Betriebszustand von einer Vielzahl an Windkraftanlagen so steuern, dass die an der Position des zumindest einen Sensors aus den Schwingungen von jeweils zwei der einzelnen Windkraftanlagen resultierenden einzelnen Schwingungsamplituden einander möglichst aufheben.

Weiterhin kann die Steuerungseinrichtung den Betriebszustand von einer Vielzahl an Windkraftanlagen so steuern, dass die an der Position des zumindest einen Sensors jeweils aus den Schwingungen von jeweils zwei der einzelnen Windkraftanlagen resultierenden einzelnen Schwingungsamplituden gegenüber den jeweils aus den Schwingungen der anderen Windkraftanlagen resultierenden einzelnen Schwingungsamplituden möglichst verschiedene Frequenzen betreffen. Damit wird insgesamt eine deutliche Reduzierung der an der Position des zumindest einen Sensors jeweils aus den Schwingungen von jeweils zwei der Windkraftanlagen resultierenden einzelnen Schwingungsamplituden erreicht.

Bei einem bevorzugten Ausführungsbeispiel der Erfindung kann die Steuerung des Betriebszustandes zumindest einer Windkraftanlage durch gezieltes Abbremsen oder Beschleunigen erfolgen.

Auch kann die Steuerung des Betriebszustandes zumindest einer Windkraftanlage durch gezieltes Verstellen der Blattverstellung der Rotorblätter dieser Windkraftanlage erfolgen.

Weiterhin ist es auch möglich, dass die Steuerung des Betriebszustandes zumindest einer Windkraftanlage durch gezieltes Einstellen der Rotationsgeschwindigkeit, beispielsweise mittels Verstellen der Blattverstellung der Rotorblätter, dieser Windkraftanlage erfolgt.

Auch kann eine Beeinflussung der Rotordrehzahl zumindest einer Windkraftanlage mittels der abgerufenen Generatorleistung dieser Windkraftanlage erfolgen. Sofern die Windkraftanlage mit einem zwischengeschalteten Getriebe versehen ist, kann dabei auch über dieses Getriebe Einfluss auf den Betriebszustand dieser Windkraftanlage genommen werden.

Die Erfindung betrifft weiterhin eine Vorrichtung zur Steuerung eines Windparks mit zumindest zwei Windkraftanlagen, wobei jede Windkraftanlage einen Turm und einen oberseitig an einer Nabe drehbar angebrachten Rotor mit Rotorblättern sowie einen hiervon angetriebenen Generator für die Stromerzeugung aufweist.

Um die eingangs genannten Nachteile zu vermeiden, und insbesondere auch für die Durchführung des erfindungsgemäßen Verfahrens, soll zumindest ein Sensor für die Messung der aus den durch die Windkraftanlagen in das Erdreich eingekoppelten Schwingungen resultierenden Gesamtstärke der Schwingungsamplitude an der Position des zumindest einen Sensors vorgesehen und mit einer Steuerungseinrichtung verbunden sein, wobei die Steuerungseinrichtung dazu eingerichtet ist, den Betriebszustand zumindest einer der Windkraftanlagen so zu steuern, dass die an der Position des zumindest einen Sensors aus den Schwingungen der einzelnen Windkraftanlagen resultierende Gesamtstärke der Schwingungsamplitude möglichst gering ist.

Auch ist von der Erfindung ein System umfasst, welches einen Windpark mit zumindest zwei Windkraftanlagen beinhaltet, wobei jede Windkraftanlage einen Turm und einen oberseitig an einer Nabe drehbar angebrachten Rotor mit Rotorblättern sowie einen hiervon angetriebenen Generator für die Stromerzeugung aufweist, wobei das System insbesondere zur Durchführung des erfindungsgemäßen Verfahrens ausgebildet ist und eine erfindungsgemäße Vorrichtung zur Steuerung des Windparks umfasst.

## Patentansprüche

1. Verfahren zur Steuerung eines Windparks mit zumindest zwei Windkraftanlagen, wobei jede Windkraftanlage einen Turm und einen oberseitig an einer Nabe drehbar angebrachten Rotor mit Rotorblättern sowie einen hiervon angetriebenen Generator für die Stromerzeugung aufweist, **dadurch gekennzeichnet, dass** zumindest ein Sensor die Gesamtstärke der Schwingungsamplitude, die aus den durch die Windkraftanlagen in das Erdreich eingekoppelten Schwingungen resultiert, an der Position des zumindest einen Sensors erfasst, und eine Steuerungseinrichtung den Betriebszustand zumindest einer der Windkraftanlagen so steuert, dass die an der Position des zumindest einen Sensors aus den Schwingungen der einzelnen Windkraftanlagen resultierende Gesamtstärke der Schwingungsamplitude möglichst gering ist.

2. Verfahren nach dem vorhergehenden Anspruch, **dadurch gekennzeichnet, dass** die Steuerungseinrichtung den Betriebszustand von zwei der Windkraftanlagen so steuert, dass ihre Rotationsgeschwindigkeiten gleich sind.

3. Verfahren nach einem der vorhergehenden Ansprüche, **dadurch gekennzeichnet, dass** die Steuerungseinrichtung den Betriebszustand von zwei der Windkraftanlagen so steuert, dass die an der Position des zumindest einen Sensors aus den Schwingungen der einzelnen Windkraftanlagen resultierenden einzelnen Schwingungsamplituden einander möglichst aufheben.

4. Verfahren nach einem der vorhergehenden Ansprüche, **dadurch gekennzeichnet, dass** die Steuerungseinrichtung den Betriebszustand von einer Vielzahl an Windkraftanlagen so steuert, dass die an der Position des zumindest einen Sensors aus den Schwingungen von jeweils zwei der einzelnen Windkraftanlagen resultierenden einzelnen Schwingungsamplituden einander möglichst aufheben.

5. Verfahren nach einem der vorhergehenden Ansprüche, **dadurch gekennzeichnet, dass** die Steuerungseinrichtung den Betriebszustand von einer Vielzahl an Windkraftanlagen so steuert, dass die an der Position des zumindest einen Sensors jeweils aus den Schwingungen von jeweils zwei der einzelnen Windkraftanlagen resultierenden einzelnen Schwingungsamplituden gegenüber den jeweils aus den Schwingungen der anderen Windkraftanlagen resultierenden einzelnen Schwingungsamplituden möglichst verschiedene Frequenzen betreffen.

6. Verfahren nach einem der vorhergehenden Ansprüche, **dadurch gekennzeichnet, dass** die Steuerung des Betriebszustandes zumindest einer Windkraftanlage durch gezieltes Abbremsen oder Beschleunigen erfolgt.

7. Verfahren nach einem der vorhergehenden Ansprüche, **dadurch gekennzeichnet, dass** die Steuerung des Betriebszustandes zumindest einer Windkraftanlage durch gezieltes Verstellen der Blattverstellung der Rotorblätter dieser Windkraftanlage erfolgt.

8. Verfahren nach einem der vorhergehenden Ansprüche, **dadurch gekennzeichnet, dass** die Steuerung des Betriebszustandes zumindest einer Windkraftanlage durch gezieltes Einstellen der Rotationsgeschwindigkeit, beispielsweise mittels Verstellen der Blattverstellung der Rotorblätter, dieser Windkraftanlage erfolgt.

9. Vorrichtung zur Steuerung eines Windparks mit zumindest zwei Windkraftanlagen, wobei jede Windkraftanlage einen Turm und einen oberseitig an einer Nabe drehbar angebrachten Rotor mit Rotorblättern sowie einen hiervon angetriebenen Generator für die Stromerzeugung aufweist, insbesondere zur Durchführung des Verfahrens nach einem der vorhergehenden Ansprüche, **dadurch gekennzeichnet, dass** zumindest ein Sensor für die Messung der aus den durch die Windkraftanlagen in das Erdreich eingekoppelten Schwingungen resultierenden Gesamtstärke der Schwingungsamplitude an der Position des zumindest einen Sensors vorgesehen und mit einer Steuerungseinrichtung verbunden ist, wobei die Steuerungseinrichtung dazu eingerichtet ist, den Betriebszustand zumindest einer der Windkraftanlagen so zu steuern, dass die an der Position des zumindest einen Sensors aus den Schwingungen der einzelnen Windkraftanlagen resultierende Gesamtstärke der Schwingungsamplitude möglichst gering ist.

10. System, umfassend einen Windpark mit zumindest zwei Windkraftanlagen, wobei jede Windkraftanlage einen Turm und einen oberseitig an einer Nabe drehbar angebrachten Rotor mit Rotorblättern sowie einen hiervon angetriebenen Generator für die Stromerzeugung aufweist, insbesondere zur Durchführung des Verfahrens nach einem der Ansprüche 1 bis 8, **dadurch gekennzeichnet, dass** eine Vorrichtung zur Steuerung des Windparks nach dem vorhergehenden Anspruch vorgesehen ist.

## Claims

1. Method for controlling a wind farm which has at least two wind turbines, each wind turbine comprising a tower and a rotor which has rotor blades and which is mounted so as to be able to rotate on a hub at the top of the tower, also comprising a generator for power generation which is driven by said rotor, **characterised in that** at least one sensor detects, at the position of the at least one sensor, the total strength of the vibration amplitude resulting from the vibrations transmitted by the wind turbines into the ground, and a control device controls the operating state of at least one of the wind turbines in such a way that the total strength of the vibration amplitude resulting from the vibrations of the individual wind turbines at the position of the at least one sensor is as low as possible.

2. Method of the preceding claim **characterised in that** the control device controls the operating state of two of the wind turbines in such a way that their rotation speeds are the same.

3. Method of any one of the preceding claims **characterised in that** the control device controls the operating state of two of the wind turbines in such a way that the individual vibration amplitudes resulting from the vibrations of the individual wind turbines at the position of the at least one sensor cancel each other out so far as possible.

4. Method of any one of the preceding claims **characterised in that** the control device controls the operating state of a plurality of wind turbines in such a way that the individual vibration amplitudes resulting from the vibrations of two of the individual wind turbines at the position of the at least one sensor cancel each other out so far as possible.

5. Method of any one of the preceding claims **characterised in that** the control device controls the operating state of a plurality of wind turbines in such a way that the individual vibration amplitudes each resulting from the vibrations of two of the individual wind turbines at the position of the at least one sensor relate to as different frequencies as possible compared with the individual vibration amplitudes each resulting from the vibrations of the other wind turbines.

6. Method of any one of the preceding claims **characterised in that** the controlling of the operating state of at least one wind turbine is effected by selective braking or accelerating.

7. Method of any one of the preceding claims **characterised in that** the controlling of the operating state of at least one wind turbine is effected by selective adjusting of the blade adjustment of the rotor blades of that wind turbine.

8. Method of any one of the preceding claims **characterised in that** the controlling of the operating state of at least one wind turbine is effected by selective setting of the rotation speed of that wind turbine, for example by way of adjusting the blade adjustment of its rotor blades.

9. Device for controlling a wind farm which has at least two wind turbines, each wind turbine comprising a tower and a rotor which has rotor blades and which is mounted so as to be able to rotate on a hub at the top of the tower, also comprising a generator for power generation which is driven by said rotor, in particular for carrying out the method according to one of the preceding claims, **characterised in that** at least one sensor is provided for measuring, at the position of the at least one sensor, the total strength of the vibration amplitude resulting from the vibrations transmitted by the wind turbines into the ground, and is connected to a control device, the control device being set up to control the operating state of at least one of the wind turbines in such a way that the total strength of the vibration amplitude resulting from the vibrations of the individual wind turbines at the position of the at least one sensor is as low as possible.

10. System, comprising a wind farm having at least two wind turbines, each wind turbine comprising a tower and a rotor which has rotor blades and which is mounted so as to be able to rotate on a hub at the top of the tower, also comprising a generator for power generation which is driven by said rotor, in particular for carrying out the method of any one of claims 1 to 8, **characterised in that** a device is provided for controlling the wind farm according to the preceding claim.

## Revendications

1. Procédé de commande d'un parc éolien comprenant au moins deux éoliennes, chaque éolienne comportant un mât et un rotor muni de pales rotoriques et monté à rotation en partie haute, sur un moyeu, ainsi qu'un générateur entraîné par ledit rotor et dédié à la génération de courant, **caractérisé par le fait qu'**au moins un capteur détecte l'intensité totale de l'amplitude vibratoire résultant des vibrations induites dans le sol par les éoliennes, à l'emplacement dudit capteur à présence minimale, et un dispositif de commande pilote l'état de fonctionnement d'au moins l'une desdites éoliennes, de façon telle que l'intensité totale de l'amplitude vibratoire résultant des vibrations des éoliennes individuelles, à l'emplacement dudit au moins un capteur, soit la plus faible possible.

2. Procédé selon la revendication précédente, **caractérisé par le fait que** le dispositif de commande pilote l'état de fonctionnement de deux, parmi les éoliennes, de façon telle que leurs vitesses de rotation soient identiques.

3. Procédé selon l'une des revendications précédentes, **caractérisé par le fait que** le dispositif de commande pilote l'état de fonctionnement de deux, parmi les éoliennes, de façon telle que les amplitudes vibratoires individuelles résultant des vibrations des éoliennes individuelles, à l'emplacement du au moins un capteur, s'annulent mutuellement le plus possible.

4. Procédé selon l'une des revendications précédentes, **caractérisé par le fait que** le dispositif de commande pilote l'état de fonctionnement d'une multiplicité d'éoliennes, de façon telle que les amplitudes vibratoires individuelles résultant respectivement des vibrations de deux, parmi les éoliennes individuelles, à l'emplacement du au moins un capteur, s'annulent mutuellement le plus possible.

5. Procédé selon l'une des revendications précédentes, **caractérisé par le fait que** le dispositif de commande pilote l'état de fonctionnement d'une multiplicité d'éoliennes, de façon telle que les amplitudes vibratoires individuelles résultant respectivement des vibrations de deux, parmi les éoliennes individuelles, à l'emplacement du au moins un capteur, concernent des fréquences les plus différentes possible par rapport aux amplitudes vibratoires individuelles résultant, respectivement, des vibrations des autres éoliennes.

6. Procédé selon l'une des revendications précédentes, **caractérisé par le fait que** le pilotage de l'état de fonctionnement d'au moins une éolienne est effectué par freinage ou par accélération ciblé(e).

7. Procédé selon l'une des revendications précédentes, **caractérisé par le fait que** le pilotage de l'état de fonctionnement d'au moins une éolienne est effectué par ajustement ciblé du pas des pales rotoriques de cette éolienne.

8. Procédé selon l'une des revendications précédentes, **caractérisé par le fait que** le pilotage de l'état de fonctionnement d'au moins une éolienne est effectué par réglage ciblé de la vitesse de rotation, par exemple au moyen d'un ajustement du pas des pales rotoriques de cette éolienne.

9. Dispositif dévolu à la commande d'un parc éolien comprenant au moins deux éoliennes, chaque éolienne comportant un mât et un rotor muni de pales rotoriques et monté à rotation en partie haute, sur un moyeu, ainsi qu'un générateur entraîné par ledit rotor et dédié à la génération de courant, notamment en vue de la mise en oeuvre du procédé conforme à l'une des revendications précédentes, **caractérisé par le fait qu'**au moins un capteur, dédié à la mesure de l'intensité totale de l'amplitude vibratoire résultant des vibrations induites dans le sol par les éoliennes, à l'emplacement dudit capteur à présence minimale, est prévu et est raccordé à un dispositif de commande, lequel dispositif de commande est agencé pour piloter l'état de fonctionnement d'au moins l'une des éoliennes, de façon telle que l'intensité totale de l'amplitude vibratoire résultant des vibrations des éoliennes individuelles, à l'emplacement dudit au moins un capteur, soit la plus faible possible.

10. Système incluant un parc éolien comprenant au moins deux éoliennes, chaque éolienne comportant un mât et un rotor muni de pales rotoriques et monté à rotation en partie haute, sur un moyeu, ainsi qu'un générateur entraîné par ledit rotor et dédié à la génération de courant, notamment en vue de la mise en oeuvre du procédé conforme à l'une des revendications 1 à 8, **caractérisé par** la présence d'un dispositif conforme à la revendication précédente, dévolu à la commande du parc éolien.
